Europäisches Patentamt

European Patent Office

Office européen des brevets

(19)

(11) Publication number: **0 426 139 B1**

# EUROPEAN PATENT SPECIFICATION

(45) Date of publication of patent specification: **05.04.95**

(51) Int. Cl.[6]: **C08F 210/06**, C08F 2/34, C08F 4/646

(21) Application number: **90120846.2**

(22) Date of filing: **30.10.90**

(54) **Process for the preparation of random copolymers.**

(30) Priority: **31.10.89 US 429611**

(43) Date of publication of application:
**08.05.91 Bulletin 91/19**

(45) Publication of the grant of the patent:
**05.04.95 Bulletin 95/14**

(84) Designated Contracting States:
**AT BE CH DE DK ES FR GB GR IT LI LU NL SE**

(56) References cited:
**EP-A- 0 291 958**
**DE-A- 2 637 990**
**US-A- 2 918 457**

(73) Proprietor: **UNION CARBIDE CHEMICALS AND PLASTICS COMPANY, INC.**
**39 Old Ridgebury Road**
**Danbury**
**Connecticut 06817-0001 (US)**

(72) Inventor: **Twu, Fred Chun-Chien**
**1150 Emerald Road**
**Charleston,**
**West Virginia 25314 (US)**
Inventor: **Ficker, Harold Kurt**
**16 Adelphia Road**
**Wayne,**
**New Jersey 07470 (US)**
Inventor: **Burdett, Ian Donald**
**11 Estill Drive**
**Charleston,**
**West Virginia 25314 (US)**

(74) Representative: **Barz, Peter, Dr. et al**
**Patentanwälte Dipl.-Ing. G. Dannenberg**
**Dr. P. Weinhold, Dr. D. Gudel**
**Dipl.-Ing. S. Schubert, Dr. P. Barz**
**Siegfriedstrasse 8**
**D-80803 München (DE)**

**Description**

This invention relates to a process for the preparation of random copolymers of propylene and 1-butene.

In EP-A-291 958 a process is provided for producing stereoregular polymers. More particularly, it was found that polymers having an isotactic index of at least 96 percent could be prepared in high yield at high production rates by polymerizing an alpha-olefin in a low pressure gas phase fluidized bed process at temperatures in excess of 50°C employing a catalyst system comprising (i) a solid catalyst precursor, which includes magnesium, titanium, halogen, and an inner electron donor, i.e., a polycarboxylic acid ester containing two coplanar ester groups attached to adjacent carbon atoms; (ii) a hydrocarbylaluminum cocatalyst; and (iii) an outer electron donor or selectivity control agent, i.e., a silicon compound containing a Silicon-oxygen-carbon linkage wherein the atomic ratio of aluminum to silicon is in the range of about 0.5:1 to about 100:1 and the atomic ratio of aluminum to titanium is in the range of about 5:1 to about 300:1.

The alpha-olefin copolymers provided by this process are random copolymers, which generally exhibit improved clarity, low temperature impact strength, and melt sealing characteristics. It would be advantageous, however, for certain applications, if one of these random copolymers could provide, in addition to the foregoing characteristics, the combination of low solubles content and higher stiffness properties especially when compared to other random copolymers at given melting points.

An object of this invention, therefore, is to provide a process for the preparation of a particular random copolymer, which has those characteristics so important in, for example, food packaging applications. Low solubles content is especially important for packages designed for holding food during cooking. Federal regulations require that n-hexane extractables (at 50°C) be below 2.6 percent by weight in order for the resin to be acceptable for use in these applications. Higher stiffness becomes important when the packaging is, for example, a thermoformed tray or an injection molded article, and relatively low melting points facilitate the forming process.

Other objects and advantages will become apparent hereinafter.

According to the present invention, a process for the copolymerization of a mixture of monomers comprising propylene and 1-butene has been discovered which comprises contacting the monomers and hydrogen in the gas phase in a single stage reaction zone, under polymerization conditions, with a catalyst system comprising (i) a solid catalyst precursor, which includes magnesium; titanium; a halogen which is chlorine, bromine, or iodine, or a mixture thereof; and a polycarboxylic acid ester containing two coplanar ester groups attached to adjacent carbon atoms; (ii) a hydrocarbyl aluminum cocatalyst; and (iii) a silicon compound containing at least one silicon-oxygen-carbon group, at a temperature of from 50°C to 90°C, wherein:

(a) the atomic ratio of aluminum in the cocatalyst to titanium in the solid catalyst precursor is in the range of 10 to 300;
(b) the molar ratio of aluminum in the cocatalyst to silicon in the selectivity control agent is in the range of 0.5 to 10;
(c) the propylene partial pressure is in the range of 0.34 to 3.1 MPa (50 to 450 psi);
(d) the 1-butene partial pressure is in the range of 69 to 340 kPa (10 to 50 psi);
(e) the hydrogen partial pressure is in the range of 0.69 to 550 kPa (0.1 psi to 80 psi); and
(f) the superficial gas velocity is in the range of 0.3 to 0.9 m (1 to 3 feet) per second; and
(g) the molar ratio of 1-butene to propylene is in the range of 0.01:1 to 0.4:1.

The solid catalyst precursor can be prepared by halogenating a magnesium compound of the formula MgRR' wherein R is an alkoxide or aryloxide group and R' is an alkoxide or aryloxide group or a halogen with a halogenated tetravalent titanium compound containing at least two halogen atoms in the presence of a halohydrocarbon and a polycarboxylic acid ester containing two coplanar ester groups attached to adjacent carbon atoms. The alkoxide groups can contain 1 to 8 carbon atoms and the aryloxide groups can contain 6 to 10 carbon atoms. The halogen can be chlorine, bromine, or iodine.

Suitable magnesium compounds include magnesium diethoxide, magnesium diisopropoxide, magnesium di-n-butoxide, magnesium diphenoxide, magnesium dinaphthoxide, ethoxy magnesium isobutoxide, ethoxy magnesium phenoxide, naphthoxy magnesium isoamyloxide, ethoxy magnesium bromide, isobutoxy magnesium chloride, phenoxy magnesium iodide, cumyloxy magnesium bromide, and naphthoxy magnesium chloride.

The halogenated tetravalent titanium compound contains at least two halogen atoms and can have up to two alkoxy and/or aryloxy groups. Examples are $TiCl_4$, $TiBr_4$, diethoxy titanium dibromide, isopropoxy titanium triiodide, dihexoxy titanium dichloride, and phenoxy titanium trichloride.

The halohydrocarbon, while preferably aromatic, can be aliphatic or alicyclic. Suitable halohydrocarbons include chlorobenzene, bromobenzene, dichlorobenzene, dichlorodibromobenzene, chlorotoluene, dichlorotoluene, chloronaphthalene, dibromomethane, trichloromethane, 1,2-dichloroethane, trichloroethane, dichlorofluoroethane, hexachloroethane, trichloropropane, chlorobutane, dichlorobutane, chloropentane, trichlorofluorooctane, tetrachloroisooctane, dibromodifluorodecane, dibromocyclobutane, and trichlorocyclohexane.

The halogenated tetravalent titanium compound and the halohydrocarbon preferably contain no more than 12 carbon atoms.

Suitable polycarboxylic acid esters are characterized by a molecularly rigid structure wherein two ester groups are attached to adjacent carbon atoms of the molecule and lie in a single plane. Such esters include polycarboxylic acid esters containing two ester groups which are attached to (a) ortho carbon atoms of a monocyclic or polycyclic aromatic ring, each of said ester groups being further linked to a branched or unbranched chain hydrocarbon radical; (b) vicinal carbon atoms of a non-aromatic monocyclic or polycyclic ring and which lie in a syn configuration with respect to each other, each of said ester groups being further linked to a branched or unbranched chain hydrocarbon radical; or (c) vicinal double bonded carbon atoms of an unsaturated aliphatic compound and which lie in a syn configuration with respect to each other, each of said ester groups being further linked to a branched or unbranched chain hydrocarbon radical.

These polycarboxylic acid esters are derived from a suitable polycarboxylic acid and a monohydric alcohol having a linear hydrocarbon moiety which may be branched or unbranched. Examples of polycarboxylic acid esters are dimethyl phthalate, diethyl phthalate, di-n-propyl phthalate, diisopropyl phthalate, di-n-butyl phthalate, diisobutyl phthalate, di-tert-butyl phthalate, diisoamyl phthalate, di-tert-amyl phthalate, dineopentyl phthalate, di-2-ethylhexyl phthalate, di-2-ethyldecyl phthalate, diethyl-1,2-fluorenedicarboxylate, diisopropyl-1,2-ferrocene-dicarboxylate, cis-diisobutyl-cyclobutane-1,2-dicarboxylate, endo-diisobutyl-5-norbornene-2,3-dicarboxylate, and endo-diisobutyl-bicyclo[2.2.2]oct-5-ene-2,3-dicarboxylate, diisobutyl maleate, and diisoamyl citraconate.

Halogenation of the magnesium compound is usually effected by employing an excess of titanium compound, i.e., 2 mols to 100 mols of titanium compound per mole of magnesium compound. The halohydrocarbon usually is employed in an amount sufficient to dissolve the titanium compound and the ester, and to adequately disperse the solid, insoluble magnesium compound. The magnesium compound generally is used in an amount of 0.005 to 2.0 mols of magnesium compound per mol of halohydrocarbon and the ester in an amount of 0.0005 to 2.0 mols of ester per mol of titanium compound. The halogenation of the magnesium compound is usually carried out in a temperature range of 60°C to 150°C over a period of 0.1 to 6 hours. The halogenated product is a solid material which can be isolated from the liquid reaction medium by filtration or decantation. After separation, it is generally treated one or more times with the titanium compound in the same molar ratio to remove residuals and maximize catalyst activity. The halohydrocarbon is usually employed during this treatment to dissolve the titanium compound and disperse the halogenated product. The treatment is preferably carried out twice, the second treatment being in the presence of a polycarboxylic acid halide containing two coplanar acid groups attached to adjacent carbon atoms. 5 to 200 millimols of acid halide are generally employed per gram atom of magnesium. Suitable acid halides include phthaloyl dichloride, 2,3-naphthalene dicarboxylic acid dichloride, endo-5-norbornene-2,3-dicarboxylic acid dichloride, maleic acid dichloride, and citraconic acid dichloride.

After the solid halogenated product has been treated one or more times with additional halogenated tetravalent titanium compound, it is usually separated from the liquid reaction medium, washed with an inert hydrocarbon to remove unreacted titanium compounds, and dried. The final washed product suitably has a titanium content of 0.5 percent by weight to 6.0 percent by weight. The atomic ratio of titanium to magnesium in the final product preferably is in the range of 0.01:1 to 0.2:1. The polycarboxylic acid ester is preferably present in a molar ratio of ester to magnesium of 0.005:1 to 10:1.

The hydrocarbyl aluminum cocatalyst is preferably represented by the formula $R_3Al$ wherein each R is an alkyl, cycloalkyl, aryl, or hydride radical; at least one R is a hydrocarbyl radical; two or three R radicals can be joined in a cyclic radical forming a heterocyclic structure; each R can be alike or different; and each R, which is a hydrocarbyl radical, has 1 to 20 carbon atoms, and preferably 1 to 10 carbon atoms. Further, each alkyl radical can be straight or branched chain and such hydrocarbyl radical can be a mixed radical, i.e., the radical can contain alkyl, aryl, and/or cycloalkyl groups. Examples of suitable radicals are: methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, decyl, isodecyl, undecyl, dodecyl, phenyl, phenethyl, methoxyphenyl, benzyl, tolyl, xylyl, naphthyl, methylnaphthyl, cyclohexyl, cycloheptyl, and cyclooctyl.

Examples of suitable hydrocarbyl aluminum compounds are as follows: triisobutylaluminum, trihexylaluminum, di-isobutylaluminum hydride, dihexylaluminum hydride, isobutylaluminum dihydride, hexylaluminum dihydride, di-isobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, and tritolylaluminum. The preferred hydrocarbyl aluminums are triethylaluminum, triisobutylaluminum, trihexylaluminum, di-isobutylaluminum hydride, and dihexylaluminum hydride.

The useful silicon compounds include compounds having the formula $R_aSiY_bX_c$ wherein R is a hydrocarbon radical having 1 to 20 carbon atoms; Y is -OR or -OCOR; and X is hydrogen, chlorine, bromine, or iodine; each R and Y are alike or different; a is an integer from 0 to 3; b is an integer from 1 to 4; c is 0 or 1; and a + b + c = 4. R can be substituted or unsubstituted. Silicon compounds containing Si-O-Si groups can also be employed providing that at least one Si-O-C group is present. Mixtures of silicon compounds can also be used. Examples of useful silicon compounds are diphenyldimethoxysilane, n-propyltrimethoxysilane, di-tert-butyldimethoxysilane, diphenyldiisobutoxysilane, diisobutyldimethoxysilane, and dimethyldiethoxysilane.

The copolymer can be prepared in the gas phase in a single stage process by continuously contacting a mixture of monomers comprising propylene and 1-butene with the catalyst system in a single stage fluidized bed reactor such as that described in US-A-4,482,687. Any conventional gas phase reactor for the production of, for example, polypropylene or propylene copolymers can be used.

Other monomers can be included in the propylene/1-butene copolymer. In this specification, the term "copolymer" is considered to mean a polymer based on two or more monomers. The additional monomers can be alpha-olefins having 2 or 5 to 12 carbon atoms or conjugated or non-conjugated dienes containing 5 to 25 carbon atoms. Useful alpha-olefins preferably do not contain any branching on carbon atoms closer than two carbon atoms removed from the double bond. Examples of suitable alpha-olefins include ethylene, 1-hexene, 4-methylpentene-1, 1-heptene, and 1-octene. Examples of the dienes are 1,4-pentadiene, 1,4-hexadiene, 1,5-hexadiene, dicyclopentadiene, cyclohexadiene, 1-vinyl-1-cyclopentane, and the alkylbicyclononadienes, indenes, and norbornenes. Ethylidene norbornene is an example of the latter. The non-conjugated dienes are preferred. The preferred additional monomers are ethylene and 1-hexene; however, it should be pointed out that the higher the ethylene content, the higher the xylene solubles.

In the copolymer, the portion attributed to propylene usually is in the range of 70 to 98 percent by weight based on the weight of the copolymer and is preferably in the range of 75 to 95 percent by weight; the portion attributed to 1-butene usually is in the range of 2 to 30 percent by weight and is preferably in the range of 5 to 25 percent by weight; and the portion attributed to other monomers, if any generally is in the range of 1 to 5 percent by weight. All percentages are based on the total weight of the random copolymer.

The amount of 1-butene incorporated into the copolymer, i.e., the portion of the copolymer based on 1-butene, can be determined by carbon 13 nuclear magnetic resonance (NMR) spectroscopy. More simply, however, the weight percent of 1-butene incorporated is linearly proportional to the 1-butene to propylene gas phase molar ratio and can be calculated from this value.

The fluidized bed, or other gas phase, reactor is operated at a temperature in the range of 50°C to 90°C and preferably at a temperature in the range of 60°C to 80°C. The operating pressure usually is in the range of 1.4 to 4.1 MPa gauge (200 psig to 600 psig) or higher and preferably 1.7 to 3.4 MPa gauge (250 psig to 500 psig). The partial pressure of the propylene is in the range of 0.34 to 3.1 MPa (50 to 450 psi)and is preferably 0.55 to 2.8 MPa (80 to 400 psi). The partial pressure of 1-butene is in the range of 69 to 340 kPa (10 to 50 psi) and is preferably 140 to 280 kPa (20 to 40 psi). The total partial pressure of other comonomers usually is 7 to 340 kPa (1 to 50 psi). The molar ratio of 1-butene to propylene is 0.01 to 0.4 and is preferably 0.1 to 0.35. The superficial gas velocity, which can be calculated by measuring cycle gas flow, is maintained in the range of 0.3 to 0.9 m (1 to 3 feet) per second and is preferably in the range of 0.3 to 0.6 m (1 to 2 feet) per second. The superficial gas velocity is preferably used together with a slow transition in order to optimize the results. In other words, the 1-butene concentration in the gas phase is increased slowly to the desired level for the product.

Hydrogen or another chain transfer agent can be used in the process. The molar ratio of hydrogen to comonomers used in the fluidized bed reactor is usually in the range of 0.0001:1 to 0.3:1 and is preferably in the range of 0.002:1 to 0.2:1. This translates into a hydrogen partial pressure in the range of 0.69 to 550 kPa (0.1 psi to 80 psi) and preferably 0.69 to 21 kPa (0.1 psi to 3 psi). The balance of the operating pressure utilized in the reactor, i.e., after the partial pressures of propylene, 1-butene, and, if used, other comonomers and the hydrogen partial pressure are considered, can be made up by using an inert gas such as nitrogen.

In the process of this invention, the components of the catalyst system are maintained in an amount such that the atomic ratio of aluminum in the cocatalyst to silicon in the selectivity control agent is 0.5 to 10,

4

and preferably is 1 to 5, and the atomic ratio of aluminum in the cocatalyst to titanium in the solid catalyst precursor is 10 to 300, and is preferably 20 to 100.

Melt index can be in the range of 0.01 to 1000 and is preferably in the range of 0.05 to 500. Average particle size can be in the range of 0.127 to 12.7 mm (0.005 to 0.5 inch) and is preferably in the range of 0.254 to 2.03 mm (0.01 to 0.08 inch. Settled bulk density can be in the range of 84 to 590 kg/m$^3$ (5 to 35 pounds per cubic foot) and is preferably in the range of 170 to 420 kg/m$^3$ (10 to 25 pounds per cubic foot).

Xylene solubles are generally held to a maximum of about 12 percent by weight based on the weight of the copolymer and are preferably maintained at a level no higher than 10 percent by weight. Low xylene solubles are desired to avoid a phenomenon called "plate-out", which is a migration of the low molecular weight species to the surface of the resin during or after processing. This can occur if the xylene solubles value becomes excessive. Subject process produces a copolymer having low xylene solubles.

The advantages of the invention lie in the product, which not only has improved clarity, low temperature impact strength, and melt sealing characteristics found, generally, in random propylene copolymers, but combines low solubles content with high stiffness properties particularly, as noted above, when compared to other random copolymers at given melting points. Preferred product properties are a DSC melting point below 145°C and most preferably below 135°C; n-hexane extractables (at 50°C) below 2.6 percent by weight and most preferably below 1.5 percent by weight; and a secant flexural modulus greater than 550 MPa (80,000 psi)and most preferably greater than 690 MPa (100,000 psi).

Additional advantages lie in the process in that there are essentially no fluidization problems or plugging; there is stable, continuous operation; and the product has acceptible morphology, i.e., small particle size, regular particle shape, an higher settled bulk density as opposed to large, blown-up, irregular shaped agglomerated copolymer particles, which are "popcorn" like or "flake" like in appearance. The irregular shape and the agglomeration are responsible for low bulk density, which together with large particle size translates into poor flow characteristics causing the fluidization problem and plugging overcome by subject process.

The invention is illustrated by the following examples:

Example 1

Preparation of Solid Catalyst Component

To a solution of 70 milliliters of titanium tetrachloride (120 grams, 0.64 mol) in 3.7 liters of chlorobenzene are added, in succession, 180 milliliters of diisobutyl phthalate (187 grams, 0.67 mol), 590 grams (5.2 mols) of magnesium diethoxide, and a solution of 4.7 liters of titanium tetrachloride (8100 grams, 43 mols) in 1.2 liters of chlorobenzene. A temperature of 20°C to 25°C is maintained during these additions. The resulting mixture is then heated to 110°C with stirring, the temperature being maintained for 1 hour. At the end of this time, the mixture is filtered while hot. A solid material is collected.

The solid material is then slurried in a solution of 4.7 liters of titanium tetrachloride (8100 grams, 43 mols) in 1.2 liters of chlorobenzene at room temperature. A solution of 45 grams (0.22 mol) of phthaloyl dichloride in 3.7 liters of chlorobenzene is added to the slurry at room temperature, and the resulting slurry is then heated to 110°C with stirring, the temperature being maintained for 30 minutes. At the end of this time, the mixture is filtered while hot. A solid material is collected.

The solid material is reslurried in a solution of 4.7 liters of titanium tetrachloride (8100 grams, 43 mols) in 1.2 liters of chlorobenzene at room temperature. An additional 3.7 liters of chlorobenzene is then added to the slurry at room temperature, and the resulting slurry is heated to 110°C with stirring, the temperature being maintained for 30 minutes. At the end of this time, the mixture is filtered while hot. A solid material is collected.

The solid material is reslurried once again in a solution of 4.7 liters of titanium tetrachloride (8100 grams, 43 mols) in 1.2 liters of chlorobenzene at room temperature. An additional 3.2 liters of chlorobenzene is then added to the slurry at room temperature, and the resulting slurry is heated to 110°C with stirring, the temperature being maintained for 30 minutes. At the end of this time, the mixture is filtered while hot. The residue is washed 6 times with 500 milliliter portions of hexane at 25°C, and then dried under a nitrogen purge. The product weighs about 500 grams.

Examples 2 to 6

The solid catalyst component prepared in Example 1 is continuously fed into a fluidized bed reactor as a 30 percent by weight dispersion in mineral oil. Simultaneously, and continuously, triethylaluminum cocatalyst dissolved in isopentane and a selectivity control agent also dissolved in isopentane are added to the reactor.

Sufficient solid catalyst component, cocatalyst, and selectivity control agent are introduced into the reactor to maintain the molar ratios of aluminum to selectivity control agent (SCA) and of triethylaluminum (TEAL) to titanium set forth in the Table.

Propylene, 1-butene, hydrogen, and nitrogen are added to maintain a specified total pressure. The total pressure and partial pressures of propylene and 1-butene are mentioned in the Table as well as the hydrogen/propylene molar ratio. The balance of the total pressure is made up with nitrogen. The resin product is transferred from the fluidized bed to a purge bin in which the resin flows downward by gravity and humidified nitrogen flows upward so that the contained moisture can deactivate the catalyst components in the resin to reduce odor.

The reactor is a pilot scale model, 35.6 cm (14 inches) in diameter and 7.5 m (28 feet) in height. It is operated in the condensing mode. Condensing mode operation is described in US-A-4,543,399 and 4,588,790 wherein the recycle gas stream is intentionally cooled to a temperature at or below the dew point of the recycle gas stream to produce a two-phase gas/liquid mixture under conditions such that the liquid phase of said mixture will remain entrained at least from the point of entry until it passes into the fluidized bed.

Examples 7 to 9

These are comparative examples using ethylene instead of 1-butene as comonomer. Catalyst, catalyst handling, polymer production, and equipment are the same as in examples 2 to 6 except as noted in Table.

Examples 10 to 12

These are comparative examples using 1-hexene instead of 1-butene as comonomer. Catalyst, catalyst handling, polymer production, and equipment are the same as in examples 2 to 9 except as noted in the Table.

Example 13

This comparative example illustrates homopolymer (zero percent comonomer) production carried out using the same steps and conditions as in examples 2 to 12 except as noted in the Table.

TABLE

| Example | 2 | 3 | 4 | 5 | 6 | 7 | 8 | 9 | 10 | 11 | 12 | 13 |
|---|---|---|---|---|---|---|---|---|---|---|---|---|
| temperature (°C) | 80 | 80 | 65 | 80 | 65 | 80 | 70 | 80 | 80 | 65 | 80 | 80 |
| total pressure MPa (psia) | 3.0(440) | 3.0(440) | 2.2(315) | 2.2(315) | 2.2(315) | 2.2(315) | 3.0(440) | 3.0(440) | 2.2(315) | 1.8(265) | 1.8(265) | 3.0(440) |
| propylene partial pressure (psi) MPa | 2.55(370) | 2.47(359) | 1.13(164) | 0.868(126) | 0.65(95) | 1.10(159) | 0.73(106) | 1.25(181) | 1.09(158) | 0.69(100) | 0.48(69) | 2.58(374) |
| 1-butene partial pressure (psi) kPa | 262(38) | 302(43.8) | 144(20.9) | 243(35.3) | 192(27.9) | 0(0) | 0(0) | 0(0) | 0(0) | 0(0) | 0(0) | 0(0) |
| hydrogen partial pressure (psi) kPa | 9.6(1.4) | 6.7(0.97) | 7.6(1.1) | 2.4(0.35) | 13(1.9) | 4.5(0.65) | 8.3(1.2) | 7.6(1.1) | 4.9(0.71) | 5.0(0.73) | 2.1(0.3) | 6.9(1) |
| hydrogen/propylene (molar ratio) | 0.0039 | 0.0027 | 0.0067 | 0.0028 | 0.02 | 0.0041 | 0.0116 | 0.0063 | 0.0045 | 0.0073 | 0.0044 | 0.0028 |
| ethylene/propylene (molar ratio) | 0 | 0 | 0 | 0 | 0 | 0.033 | 0.041 | 0.043 | 0 | 0 | 0 | 0 |
| 1-butene/propylene (molar ratio) | 0.1 | 0.12 | 0.13 | 0.28 | 0.29 | 0 | 0 | 0 | 0 | 0 | 0 | 0 |
| 1-hexene/propylene (molar ratio) | 0 | 0 | 0 | 0 | 0 | 0 | 0 | 0 | 0.052 | 0.069 | 0.061 | 0 |
| superficial gas velocity (ft/sec) m/sec | 0.33(1.1) | 0.36(1.2) | 0.33(1.1) | 0.6(2) | 0.6(2) | 0.45(1.5) | 0.33(1.1) | 0.36(1.2) | 0.33(1.1) | 0.33(1.1) | 0.33(1.1) | 0.33(1.1) |

TABLE (Continued)

| Example | 2 | 3 | 4 | 5 | 6 | 7 | 8 | 9 | 10 | 11 | 12 | 13 |
|---|---|---|---|---|---|---|---|---|---|---|---|---|
| SCA type | DPDMS | DPDMS | DIBDMS | DIBDMS | DIBDMS | DPDMS | DIBDMS | DIBDMS | DIBDMS | DIBDMS | DIBDMS | DIBDMS |
| Al/Ti (molar ratio) | 68.2 | 53.4 | 26.5 | 75.9 | 29.4 | 61 | 39.3 | 177 | 69.7 | 74.3 | 28.9 | 43 |
| Al/SCA (molar ratio) | 2.6 | 2.5 | 1.9 | 2.6 | 1.6 | 2.9 | 2.2 | 2.1 | 1.9 | 1.7 | 1.7 | 2.3 |
| melt index (g/10 min) | 5.1 | 3.4 | 3.6 | 3.4 | 7.1 | 4.5 | 4.9 | 4.8 | 5.7 | 5.0 | 6.2 | 3.5 |
| bulk density $kJ/m^3$ /(lbs/cu ft) | 346 (20.6) | 322 (19.2) | 336 (20) | 319 (19) | 252 (15) | 386 (23) | 339 (20.2) | 263 (15.7) | 208 (12.4) | 168 (10) | 176 (10.5) | 376 (22.4) |
| APS $\mu m$ /(inch) | 0.69 (0.027) | 0.69 (0.027) | - | 1.9 (0.075) | 1.4 (0.056) | 0.71 (0.028) | 0.81 (0.032) | 3.8 (0.12) | 1.9 (<0.075) | 2.5 (<0.1) | 2.7 (<0.082) | 0.25 (<0.0099) |
| Ti (ppm) | 1.1 | 1.2 | 4.3 | 3.5 | 6.9 | 1.8 | 2.3 | 1.2 | 2.4 | 2.1 | 6.0 | 2.9 |
| DSC MP (°C) | 154 | 151 | 141 | 133 | 127 | 139 | 131 | 126 | 143 | 140 | 146 | 164 |
| xylene solubles (%) | 2 | 2.2 | 3.7 | 7.3 | 11.7 | 7.9 | 15 | 22 | 23 | 44 | 32 | 1.8 |
| n-hexane extractables (%) | 0.6 | 0.7 | - | 1.3 | - | 2.3 | 3.2 | 4.2 | 4.7 | 7 | - | - |
| 1% SFM $MPa$ /(kpsi) | 1100 (160) | 1030 (150) | 940 (136) | 695 (101) | 570 (83) | 695 (101) | 500 (73) | 390 (57) | 370 (54) | 300 (44) | 270 (39) | 1370 (199) |
| 1-butene (wt %) | 5 | 6 | 11 | 16 | 20 | 0 | 0 | 0 | 0 | 0 | 0 | 0 |
| ethylene (wt %) | 0 | 0 | 0 | 0 | 0 | 5 | 6.5 | 7.7 | 0 | 0 | 0 | 0 |
| 1-hexene (wt %) | 0 | 0 | 0 | 0 | 0 | 0 | 0 | 0 | 11.5 | 14.6 | 13.5 | 0 |

Notes with respect to the Table:

1.
  DIBDMS =  diisobutyldimethoxysilane.

DPDMS = diphenyldimethoxysilane.

2. Melt index is determined under ASTM D-1238, Condition L, measured at 230°C with a 2160 gram load, and reported as grams per 10 minutes (g/10 min).

3. Bulk density can be referred to as settled bulk density and is determined as follows: a resin sample of a fixed volume is collected and weighed. Bulk density is calculated by dividing the weight by the volume. It is reported in $kg/m^3$ (pounds per cubic foot (lbs/cu ft)).

4. APS [mm (inch)] is average particle size. It is determined by passing the resin particles through a series of ASTM standard sieves, weighing the retained particles on each sieve, and calculating the number average particle size in mm (inches).

5. Ti (ppmw) is parts per million by weight based on the weight of the total resin. The titanium is determined by the spectrophotometric method.

6. DSC MP (°C) is the DSC melting point in °C as determined by heating a small sample of resin in a differential scanning calorimeter at a constant rate, cooling at a constant rate, and reheating at a constant rate. The constant rate is 10°C per minute.

7. Xylene solubles (%) are defined as the percent by weight that stays in solution after the copolymer sample is dissolved in hot xylene and the solution is allowed to cool to 23°C.

8. n-Hexane extractables are the percent by weight of hexane extractables determined as follows: a film sample of the copolymer 0.076 to 0.10 mm (3 to 4 mils) in thickness (prepared by chill roll extrusion) is extracted at 50°C in n-hexane for 2 hours and then filtered. The filtrate is evaporated and the total residue weighed as a measure of the n-hexane extractable fraction.

9. 1% SFM [MPa (kpsi)] is the secant flexural modulus, a measure of stiffness. It is defined as the slope of the stress-strain line at one percent strain. The unit is MPa [kpsi (kpsi = 1000 pounds per square inch)]. 1% SFM is determined according to ASTM D-790 at a strain rate of 1.27 mm (0.05 inch) per minute.

10. 1-Butene content is measured by C 13 NMR or calculated from monomer feed ratios or by using infrared spectroscopy.

11. Ethylene content is determined by DSC melting point depression (5°C per 1% by wt.)

12. 1-Hexene content is calculated from monomer feed ratios or measured by C 13 NMR.

## Claims

1. A process for the copolymerization of a mixture of monomers comprising propylene and 1-butene which comprises contacting the monomers and hydrogen in the gas phase in a single stage reaction zone, under polymerization conditions, with a catalyst system comprising (i) a solid catalyst precursor, which includes magnesium; titanium; a halogen which is chlorine, bromine, or iodine, or a mixture thereof; and a polycarboxylic acid ester containing two coplanar ester groups attached to adjacent carbon atoms; (ii) a hydrocarbyl aluminum cocatalyst; and (iii) a silicon compound containing at least one Silicon-oxygen-carbon group, at a temperature of from 50°C to 90°C, wherein:

    (a) the atomic ratio of aluminum in the cocatalyst to titanium in the solid catalyst precursor is in the range of 10 to 300;
    (b) the molar ratio of aluminum in the cocatalyst to silicon in the selectivity control agent is in the range of 0.5 to 10;
    (c) the propylene partial pressure is in the range of 034 to 3.1 MPa (50 to 450 psi);
    (d) the 1-butene partial pressure is in the range of 69 to 340 kPa (10 to 50 psi);
    (e) the hydrogen partial pressure is in the range of 0.69 to 550 kPa (0.1 psi to 80 psi);
    (f) the superficial gas velocity is in the range of 0.3 to 0.9 m (1 to 3 feet) per second; and
    (g) the molar ratio of 1-butene to propylene is in the range of 0.01:1 to 0.4:1.

2. The process defined in claim 1 wherein the atomic ratio of aluminum to titanium is in the range of 20 to 100.

3. The process defined in claim 1 or 2 wherein the molar ratio of aluminum to silicon compound is in the range of 1 to 5.

4. The process defined in any of claims 1-3 wherein the temperature is in the range of 60°C to 80°C.

5. The process defined in any of claims 1-4 wherein the propylene partial pressure is in the range of 0.55 to 2.8 MPa (80 to 400 psi).

6. The process defined in any of claims 1-5 wherein the 1-butene partial pressure is in the range of 140 to 280 kPa (20 to 40 psi).

7. The process as defined in any of claims 1-6 wherein the hydrogen partial pressure is in the range of 0.69 to 21 kPa (0.1 psi to 3 psi).

8. The process defined in claims 1-7 wherein the superficial gas velocity is in the range of 0.3 to 0.6 m (1 to 2 feet) per second.

9. The process as defined in any of claims 1-8 wherein the molar ratio of 1-butene to propylene is in the range of 0.1:1 to 0.35:1.

10. The process defined in any of claims 1-9 wherein the mixture of comonomers additionally comprises ethylene.

11. The process defined in claim 10 wherein a sufficient amount of ethylene is introduced to provide 1 to 3 percent by weight of ethylene based on the weight of the copolymer.

12. The process defined in any of claims 1-11 wherein the mixture of comonomers additionally comprises 1-hexene.

13. The process defined in claim 12 wherein a sufficient amount of 1-hexene is introduced to provide 1 to 3 percent by weight of 1-hexene based on the weight of the copolymer.

14. The process defined in any of claims 1-13 wherein the process is carried out continuously and in a fluidized bed.

15. The process defined in any of claims 1-14 wherein the solid catalyst precursor is obtained by halogenating a magnesium compound having the formula MgRR', wherein R is an alkoxide or aryloxide group and R' is R or halogen, with a halogenated tetravalent titanium compound containing at least two halogen atoms, in the presence of a halohydrocarbon and a polycarboxylic acid ester containing two coplanar ester groups attached to adjacent carbon atoms.

16. The process defined in claim 15 wherein the magnesium compound is magnesium diethoxide, the halogenated tetravalent titanium compound is titanium tetrachloride, the halohydrocarbon is chlorobenzene, and the polycarboxylic acid ester is diisobutyl phthalate.

17. The process defined in any of claims 1-16 wherein the hydrocarbyl aluminum cocatalyst is a trialkylaluminum.

18. The process defined in any of claims 1-17 wherein the silicon compound has the formula

$$R_aSiY_bX_c$$

wherein R is a hydrocarbyl having 1 to 20 carbon atoms; Y is -OR or -OCOR; and X is hydrogen, chlorine, bromine, or iodine; each R and Y are the same or different; a is an integer from 0 to 3; b is an integer from 1 to 4; c is 0 or 1; and a + b + c = 4.

19. The process defined in any of claims 1-18 wherein the silicon compound is diphenyldimethoxysilane, di-isobutyldimethoxysilane or n-propyltrimethoxysilane.

**Patentansprüche**

1. Verfahren zur Copolymerisation einer Propylen und 1-Buten umfassenden Monomermischung, welches umfaßt das Inkontaktbringen der Monomeren und von Wasserstoff in der Gasphase in einer einstufigen Reaktionszone unter Polymerisationsbedingungen mit einem Katalysatorsystem, welches umfaßt (i) einen festen Katalysator-Vorläufer, der Magnesium; Titan; ein Halogen, das Chlor, Brom oder Iod oder eine Mischung davon ist; und einen zwei coplanare Estergruppen, die sich an benachbarten Kohlenstoffatomen befinden, enthaltenden Polycarbonsäureester einschließt; (ii) einen Hydrocarbylaluminium-Cokatalysator; und (iii) eine Siliciumverbindung, die mindestens eine Silicium-Sauerstoff-Kohlenstoff-Gruppe enthält, bei einer Temperatur von 50°C bis 90°C, wobei:

(a) das Atomverhältnis von Aluminium im Cokatalysator zu Titan im festen Katalysator-Vorläufer im Bereich von 10 bis 300 liegt;

(b) das Molverhältnis von Aluminium im Cokatalysator zu Silicium im Selektivitätsregulierungsmittel im Bereich von 0,5 bis 10 liegt;

(c) der Propylen-Partialdruck im Bereich von 0,34 bis 3,1 MPa (50 bis 450 psi) liegt;

(d) der 1-Buten-Partialdruck im Bereich von 69 bis 340 kPa (10 bis 50 psi) liegt;

(e) der Wasserstoff-Partialdruck im Bereich von 0,69 bis 550 kPa (0,1 psi bis 80 psi) liegt;

(f) die Oberflächen-Gasgeschwindigkeit im Bereich von 0,3 bis 0,9 m (1 bis 3 Fuß) pro Sekunde liegt; und

(g) das Molverhältnis von 1-Buten zu Propylen im Bereich von 0,01:1 bis 0,4:1 liegt.

2. Verfahren nach Anspruch 1, in welchem das Atomverhältnis von Aluminium zu Titan im Bereich von 20 bis 100 liegt.

3. Verfahren nach Anspruch 1 oder 2, in welchem das Molverhältnis von Aluminium zu Siliciumverbindung im Bereich von 1 bis 5 liegt.

4. Verfahren nach irgendeinem der Ansprüche 1 bis 3, in welchem die Temperatur im Bereich von 60°C bis 80°C liegt.

5. Verfahren nach irgendeinem der Ansprüche 1 - 4, in welchem der Propylen-Partialdruck im Bereich von 0,55 bis 2,8 MPa (80 bis 400 psi) liegt.

6. Verfahren nach irgendeinem der Ansprüche 1 - 5, in welchem der 1-Buten-Partialdruck im Bereich von 140 bis 280 kPa (20 bis 40 psi) liegt.

7. Verfahren nach irgendeinem der Anprüche 1 - 6, in welchem der Wasserstoff-Partialdruck im Bereich von 0,69 bis 21 kPa (0,1 psi bis 3 psi) liegt.

8. Verfahren nach irgendeinem der Ansprüche 1 - 7, in welchem die Oberflächen-Gasgeschwindigkeit im Bereich von 0,3 bis 0,6 m (1 bis 2 Fuß) pro Sekunde liegt.

9. Verfahren nach irgendeinem der Ansprüche 1 - 8, in welchem das Molverhältnis von 1-Buten zu Propylen im Bereich von 0,1:1 bis 0,35:1 liegt.

10. Verfahren nach irgendeinem der Ansprüche 1 - 9, in welchem die Mischung von Comonomeren zusätzlich Ethylen umfaßt.

11. Verfahren nach Anspruch 10, in welchem eine ausreichende Ethylenmenge eingeführt wird, um 1 bis 3 Gewichtsprozent Ethylen, bezogen auf das Gewicht des Copolymeren, zu liefern.

12. Verfahren nach irgendeinem der Ansprüche 1 - 11, in welchem die Mischung von Comonomeren zusätzlich 1-Hexen umfaßt.

13. Verfahren nach Anspruch 12, in welchem eine ausreichende Menge an 1-Hexen eingeführt wird, um 1 bis 3 Gewichtsprozent 1-Hexen, bezogen auf das Gewicht des Copolymeren, zu liefern.

14. Verfahren nach irgendeinem der Ansprüche 1 - 13, das kontinuierlich und in einem Fließbett durchgeführt wird.

15. Verfahren nach irgendeinem der Ansprüche 1 - 14, in welchem der feste Katalysator-Vorläufer erhalten wird durch Halogenierung einer Magnesiumverbindung mit der Formel MgRR', in welcher R eine Alkoxid- oder Aryloxidgruppe ist und R' für R oder Halogen steht, mit einer vierwertigen halogenierten Titanverbindung, die mindestens zwei Halogenatome enthält, in Anwesenheit eines Halogenkohlenwasserstoffes und eines Polycarbonsäureesters, der zwei coplanare Estergruppen, die sich an benachbar-

11

ten Kohlenstoffatomen befinden, enthält.

16. Verfahren nach Anspruch 15, in welchem die Magnesiumverbindung Magnesiumdiethoxid ist, die vierwertige halogenierte Titanverbindung Titantetrachlorid ist, der Halogenkohlenwasserstoff Chlorbenzol ist und der Polycarbonsäureester Diisobutylphthalat ist.

17. Verfahren nach irgendeinem der Ansprüche 1 - 16, in welchem der Hydrocarbylaluminium-Cokatalysator ein Trialkylaluminium ist.

18. Verfahren nach irgendeinem der Ansprüche 1 - 17, in welchem die Siliciumverbindung die Formel

$$R_aSiY_bX_c$$

aufweist, in welcher R ein Kohlenwasserstoffrest mit 1 bis 20 Kohlenstoffatomen ist; Y für -OR oder -OCOR steht; und X Wasserstoff, Chlor, Brom oder Iod darstellt; jedes R und Y gleich oder verschieden ist; a eine ganze Zahl von 0 bis 3 ist; b eine ganze Zahl von 1 bis 4 ist; c 0 oder 1 ist; und a + b + c = 4 .

19. Verfahren nach irgendeinem der Ansprüche 1 - 18, in welchem die Siliciumverbindung Diphenyldimethoxysilan, Diisobutyldimethoxysilan oder n-Propyltrimethoxysilan ist.

**Revendications**

1. Procédé de copolymérisation d'un mélange de monomères comprenant du propylène et du 1-butène, qui comprend la mise en contact des monomères et d'hydrogène en phase gazeuse dans une zone réactionnelle à un seul étage, dans des conditions de polymérisation, avec une formulation de catalyseur comprenant (i) un précurseur de catalyseur solide, qui renferme du magnésium ; du titane ; un halogène qui est le chlore, le brome ou l'iode ou un de leurs mélanges ; et un ester de polymère d'acide carboxylique contenant deux groupes ester coplanaires fixés à des atomes de carbone adjacents ; (ii) un cocatalyseur consistant en hydrocarbylaluminium ; et (iii) un composé de silicium contenant au moins un groupe silicium-oxygène-carbone, à une température de 50°C à 90°C, dans lequel :
   (a) le rapport atomique de l'aluminium dans le cocatalyseur au titane dans le précurseur de catalyseur solide est compris dans l'intervalle de 10 à 300 ;
   (b) le rapport molaire de l'aluminium dans le cocatalyseur au silicium dans l'agent d'ajustement de sélectivité est compris dans l'intervalle de 0,5 à 10 ;
   (c) la pression partielle du propylène est comprise dans l'intervalle de 0,34 à 3,1 MPa (50 à 450 psi) ;
   (d) la pression partielle du 1-butène est comprise dans l'intervalle de 69 à 340 kPa (10 à 50 psi) ;
   (e) la pression partielle de l'hydrogène est comprise dans l'intervalle de 0,69 à 550 kPa (0,1 psi à 80 psi) ;
   (f) la vitesse superficielle du gaz est comprise dans l'intervalle de 0,3 à 0,9 m (1 à 3 ft) par seconde ; et
   (g) le rapport molaire du 1-butène au propylène est compris dans l'intervalle de 0,01:1 à 0,4:1.

2. Procédé suivant la revendication 1, dans lequel le rapport atomique de l'aluminium au titane est compris dans l'intervalle de 20 à 100.

3. Procédé suivant la revendication 1 ou 2, dans lequel le rapport molaire de l'aluminium au composé de silicium est compris dans l'intervalle de 1 à 5.

4. Procédé suivant l'une quelconque des revendications 1 à 3, dans lequel la température est comprise dans l'intervalle de 60°C à 80°C.

5. Procédé suivant l'une quelconque des revendications 1 à 4, dans lequel la pression partielle du propylène est comprise dans l'intervalle de 0,55 à 2,8 MPa (80 à 400 psi).

6. Procédé suivant l'une quelconque des revendications 1 à 5, dans lequel la pression partielle du 1-butène est comprise dans l'intervalle de 140 à 280 kPa (20 à 40 psi).

7. Procédé suivant l'une quelconque des revendications 1 à 6, dans lequel la pression partielle de l'hydrogène est comprise dans l'intervalle de 0,69 à 21 kPa (0,1 psi à 3 psi).

8. Procédé suivant les revendications 1 à 7, dans lequel la vitesse superficielle du gaz est comprise dans l'intervalle de 0,3 à 0,6 m (1 à 2 ft) par seconde.

9. Procédé suivant l'une quelconque des revendications 1 à 8, dans lequel le rapport molaire du 1-butène au propylène est compris dans l'intervalle de 0,1:1 à 0,35:1.

10. Procédé suivant l'une quelconque des revendications 1 à 9, dans lequel le mélange de comonomères comprend en outre de l'éthylène.

11. Procédé suivant la revendication 10, dans lequel une quantité suffisante d'éthylène est introduite pour fournir 1 à 3 % en poids d'éthylène sur la base du poids du copolymère.

12. Procédé suivant l'une quelconque des revendications 1 à 11, dans lequel le mélange de comonomères comprend en outre du 1-hexène.

13. Procédé suivant la revendication 12, dans lequel une quantité suffisante de 1-hexène est introduite pour fournir 1 à 3 % en poids de 1-hexène sur la base du poids du copolymère.

14. Procédé suivant l'une quelconque des revendications 1 à 13, qui est mis en oeuvre de manière continue et dans un lit fluidisé.

15. Procédé suivant l'une quelconque des revendications 1 à 14, dans lequel le précurseur de catalyseur solide est obtenu par halogénation d'un composé de magnésium répondant à la formule MgRR', dans laquelle R représente un groupe alcoolate ou aryloxyde et R' représente R ou un halogène, avec un composé de titane tétravalent halogéné contenant au moins deux atomes d'halogènes, en présence d'un hydrocarbure halogéné et d'un ester de polymère d'acide carboxylique contenant deux groupes ester coplanaires fixés à des atomes de carbone adjacents.

16. Procédé suivant la revendication 15, dans lequel le composé de magnésium est le diéthylate de magnésium, le composé de titane tétravalent halogéné est le tétrachlorure de titane, l'hydrocarbure halogéné est le chlorobenzène et l'ester de polymère d'acide carboxylique est le phtalate de diisobutyle.

17. Procédé suivant l'une quelconque des revendications 1 à 16, dans lequel le cocatalyseur consistant en un hydrocarbyl-aluminium est un trialkylaluminium.

18. Procédé suivant l'une quelconque des revendications 1 à 17, dans lequel le composé de silicium répond à la formule

$R_aSiY_BX_C$

dans laquelle R représente un groupe hydrocarbyle ayant 1 à 20 atomes de carbone ; Y représente un groupe -OR ou -OCOR ; et X représente l'hydrogène, le chlore, le brome ou l'iode ; les groupes R et Y sont identiques ou différents ; a est un nombre entier de 0 à 3 ; b est un nombre entier de 1 à 4 ; c est égal à 0 ou 1 ; et la somme a + b + c est égale à 4.

19. Procédé suivant l'une quelconque des revendications 1 à 18, dans lequel le composé de silicium est le diphényldiméthoxysilane, le diisobutyldiméthoxysilane ou le n-propyltriméthoxysilane.